# EUROPEAN PATENT SPECIFICATION

(11) **EP 3 910 191 B1**
(45) Date of publication and mention of the grant of the patent: **27.09.2023**
(21) Application number: 21176302.4
(22) Date of filing: 29.03.2016
(51) Int. Cl.: F02M 65/00, F02D 19/06, F02M 47/02

(54) **A METHOD OF CHECKING A DEAERATING VALVE FOR AN INJECTOR VALVE**
VERFAHREN ZUR ÜBERPRÜFUNG EINES ENTLÜFTUNGSVENTILS FÜR EIN EINSPRITZVENTIL
PROCÉDÉ PERMETTANT DE VÉRIFIER UNE SOUPAPE DE DÉSAÉRATION POUR UNE SOUPAPE D'INJECTEUR

(30) Priority: 27.03.2015 DK PA201500193
(43) Date of publication of application: 17.11.2021
(62) Divisional of application: 16771434.4
(73) Proprietor: IOP Marine A/S, 2605 Brøndby (DK)
(72) Inventor: Sowinski, Grzegorz, 2000 Frederiksberg (DK)
(74) Representative: Nordic Patent Service A/S

(56) References cited:
- WO-A1-2013/068090
- WO-A1-2013/124035
- US-A1- 2013 104 853

## Description

The invention is related to a method of checking a deaerating valve for an injector valve for liquid gas such as methanol.

A new inj ector valve for methanol for a two stroke combustion engine has been developed by MAN Diesel & Turbo. The injector valve is supplied with sealing oil and control oil for controlling the supply of liquid gas. Leaks if any could be very dangerous.

WO 2013068090 in the name of IOP Marine A/S discloses a method of testing an injector valve for a combustion engine. The injector valve with a top cover is placed in a holder with a first and a second chamber, the valve spraying nozzle being placed in the first chamber and sealing oil and control oil being supplied. Thereafter the valve in closed position is influenced by a test gas under pressure so as to control whether the valve seat and the valve gaskets are leak proof. However the opening pressure could not be checked.

WO 2013124035 in the name of IOP Marine A/S discloses a method of testing a gas shut-down valve for a combustion engine for leakages at the valve seat and at a sealing ring surrounding the valve. The gas-shut down valve with the surrounding sealing ring is placed in a chamber, so that the chamber is divided into a first portion and a second portion including the valve seat, and the valve in closed condition is influenced by a non-burnable test gas under pressure, the test gas being supplied to the second portion of the chamber and the remainder of the valve being supplied with sealing oil at a pressure higher than the pressure of the gas. Leakages at the valve seat and/or the sealing ring of the valve is detected through a to the first portion of the chamber connected gas discharge tube, which is connected to a separate container with liquid, whereby leakages of gas can be observed as bubbles in the liquid within the container.

The object of the invention is to provide an alternative and better way of testing an injector valve.

A method of checking a deaerating valve for an injector valve is provided, wherein the injector valve with pistons and a top cover is placed in a holder and the deaerating valve is mounted in the top cover, said deaerating valve having an oil inlet port communicating with a channel within a piston, an oil outlet port with an outlet connection, a spring controlling the piston for opening the outlet connection thereby providing a fluid communication from the oil inlet port through the channel within the piston and to the oil outlet port, and said top cover having a control oil supply port communicating with an oil supply channel and an oil outlet port communicating with a spray chamber, which oil supply channel further communicates with the oil inlet port of the deareating valve, wherein control oil is supplied to the deaerating valve, said control oil being accumulated in a hydraulic accumulator, from where the control oil is supplied to the control oil supply port, through the channel to the oil inlet port of the deaerating valve and further into the channel within the piston, and wherein the pressure of the supplied control oil is increased so as to close the deaerating valve by pushing the piston to overcome the force of the spring thereby closing the outlet connection within the deaerating valve, after which the control oil pressure is slowly decreased until the deaerating valve opens, whereby control oil flow via the control oil supply port, through the channel to the oil inlet port, through the channel of the piston, through the oil outlet port, and through the oil outlet port in the top cover into the spray chamber, and the opening pressure is shown on a display.

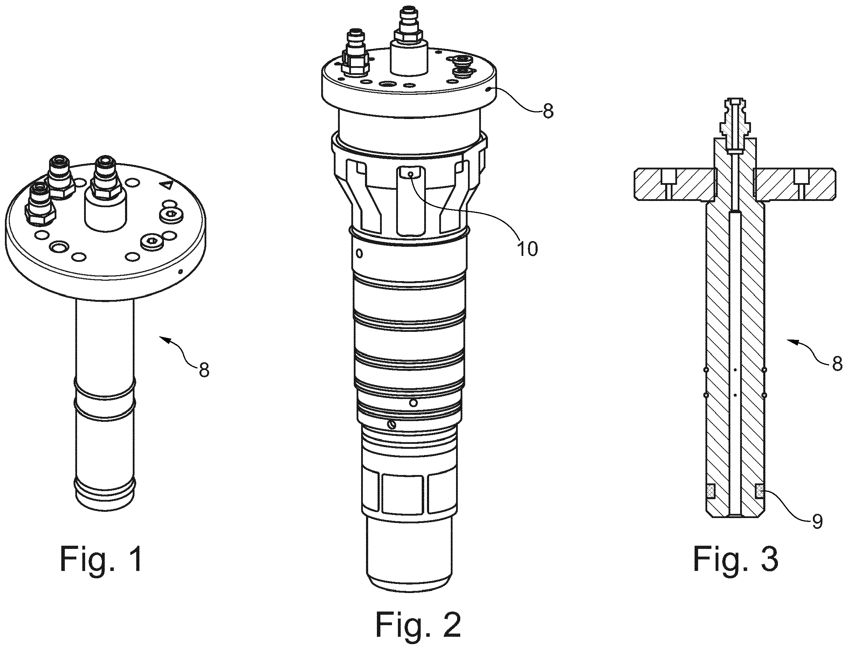

The invention will be described in the following with reference to the drawings in which
Fig. 1 illustrates a connecting piece to be placed in the injector valve
Fig. 2 the connecting piece placed in the injector valve
Fig. 3 a sectional view of the connecting piece placed in the injector valve
Fig. 4 a longitudinal sectional view of the injector valve with the connecting piece
Fig. 5 a longitudinal sectional view of the injector valve turned in relation to fig. 3
Fig. 6 an amplified view of a detail in fig. 5
Fig. 7 another longitudinal sectional view of the injector valve with the connecting piece
Fig. 8 an amplified view of a detail in fig. 7
Fig. 9 another longitudinal sectional view of the injector valve with the connecting piece
Fig. 10 an amplified view of a detail in fig. 9
Fig. 11 the injector valve with a top cover

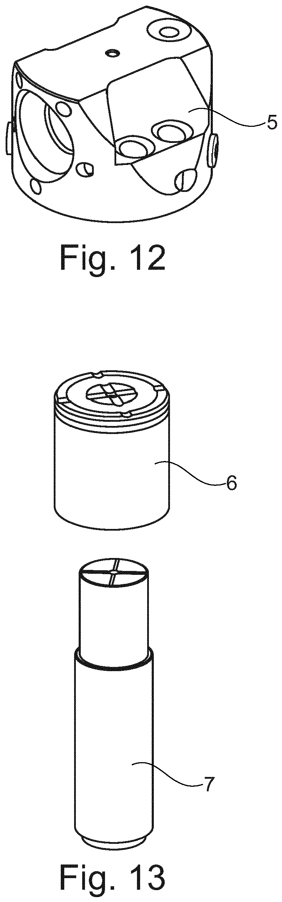

Fig. 12 a perspective view of the top cover
Fig. 13 some pistons in the top cover
Fig. 14 a perspective view of the injector valve with the top cover placed in a holder
Fig. 15 a suction valve in the injector valve

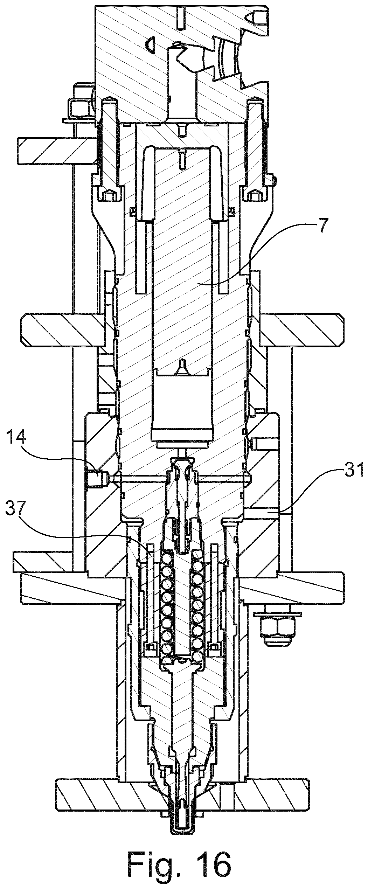

Fig. 16 a longitudinal sectional view of the injector valve as shown in fig. 11 turned a little
Fig. 17 a deaerating valve to be mounted in the top cover illustrated in fig. 12
Fig. 18 an illustration of the injector valve with the connecting piece
Fig. 19-21 perspective views and longitudinal sectional views of the injector valve with the top cover
Fig. 22 a perspective view of the injector valve with the top cover
Fig. 23 a diagram of a cleaning system and
Fig. 24 a diagram of a test system with lines for supply of sealing oil, fuel inlet and purge oil

The injector valve designed by MAN Diesel & Turbo is for a two stroke combustion engine. The injector valve has been designed to run a combustion engine with low flashpoint fuels such as methanol, ethanol, LPG or DME.

The injector valve is supplied with sealing oil, control oil, purge oil and liquid gas as fuel. Sealing oil is to prevent internal leak of liquid gas from entering unintended areas of the injector valve. Control oil is to control the timing and the load with which liquid gas is to be delivered to the combustion chamber. Purge oil is to remove liquid gas left in the injector valve when the engine is not running (by applying purge oil a suction valve will open and liquid gas can be pushed out and back to the fuel rail). Liquid fuel is supplied to the injector valve constantly with a pressure of 8 bar.

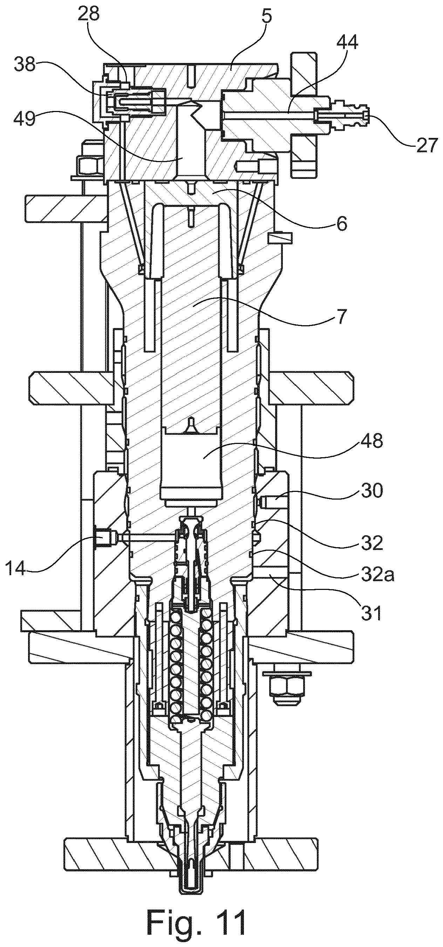

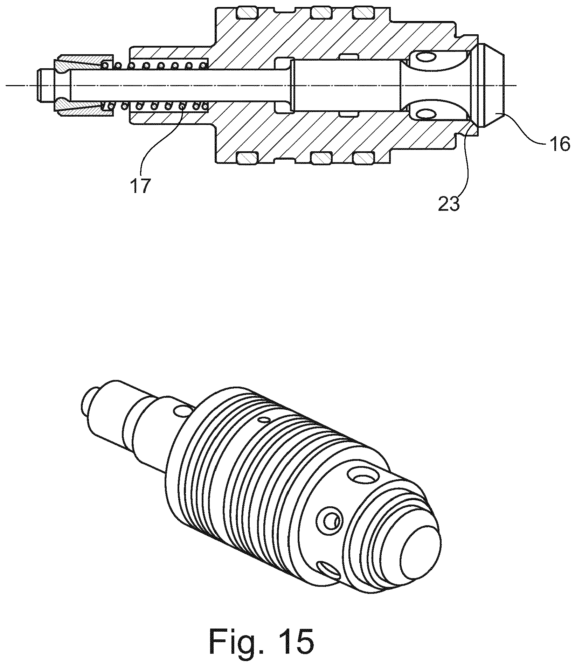

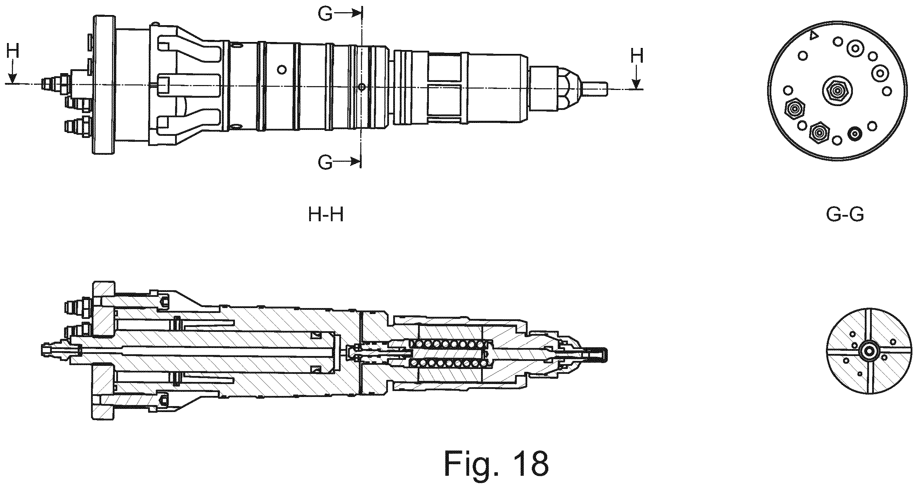

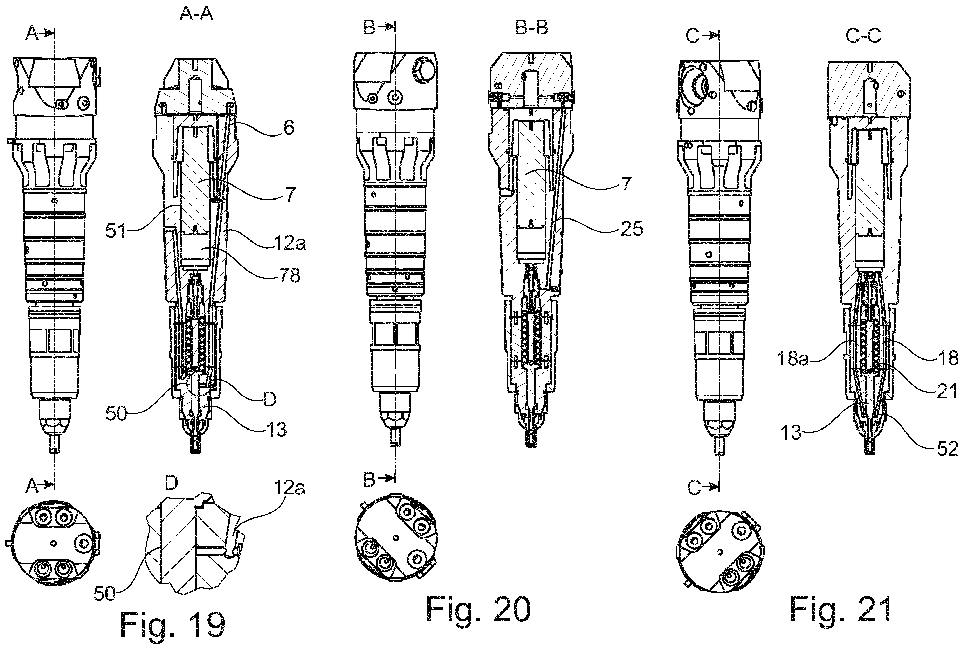

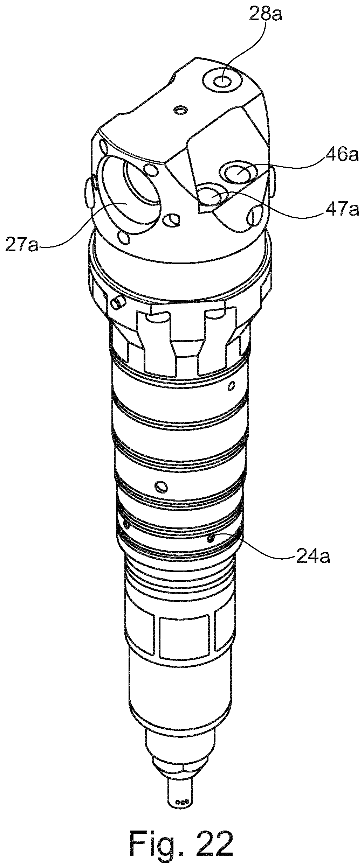

During normal operation of the engine the injector valve is supplied with liquid gas of a pressure of 8 bar from the fuel rail to ports 24a of the injector valve, fig. 22 (there are four ports 24a). Liquid gas flows through channels 24, fig. 18, and a suction valve fig. 15 to a chamber 48 in the injector valve, fig. 11. Control oil is supplied to a port 27a, fig 22. Purge oil (hydraulic mineral oil) is supplied to a port 46a, fig. 22. Sealing oil (hydraulic mineral oil) is supplied to a port 47a from where it flows through a channel 12a, fig. 19, and enters a chamber 51 surrounding a piston 7, fig. 19, and a chamber 50 surrounding the needle 13. Sealing oil is applied with a pressure of 150-200 bar when the engine is working. Leak oil is coming out from a port 28a, fig. 22. Purge oil is supplied to the port 46a, fig. 22, from where it flows through a channel 25, fig. 20, to the suction valve, fig. 15.

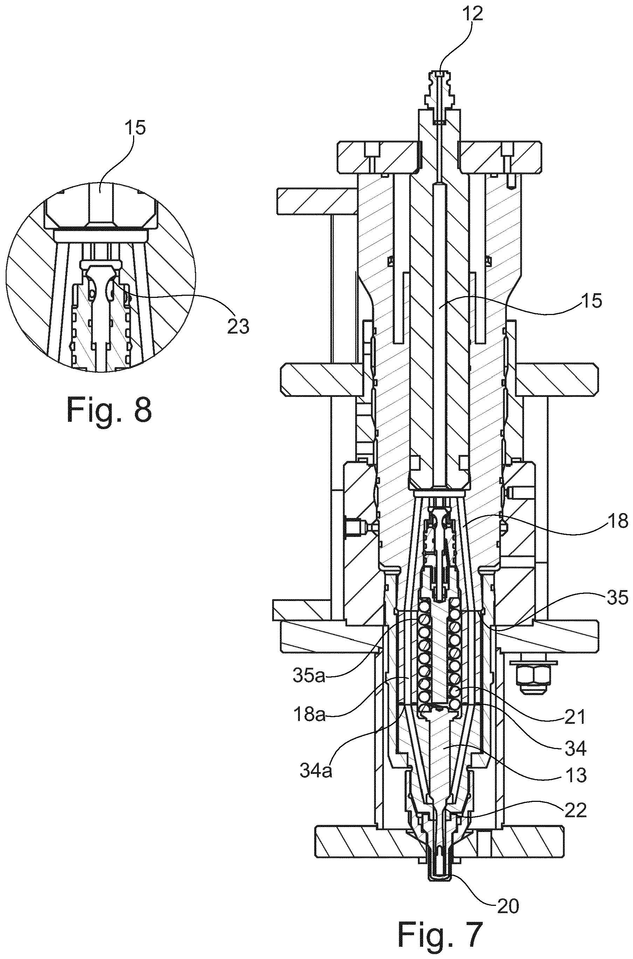

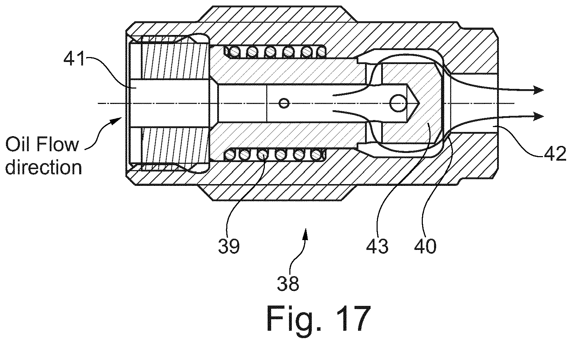

The injector valve works in the following way:
- Liquid gas applied with a pressure of 8 bar flows through the suction valve. The suction valve is normally closed as a piston 16 in the suction valve is pressed down by means of a spring 17, fig. 15.When the liquid gas is applied with a pressure of 8 bar, the piston 16 is raised, and liquid gas can flow to the chamber 48, fig 19. The pressure of 8 bar will raise the pistons 7,6 fig. 19.
- When the control oil is applied with a pressure of 300 bar to a port 27, fig. 11, control oil will flow through a chamber 49 and push down the pistons 6,7. As a result liquid gas is compressed in the chamber 48 and pushed out through channels 18,18a to a chamber 52, fig 21. The pressure in the chamber 52 raises the needle 13, and liquid will be sprayed out through the nozzle 20 of the injector valve, fig. 7 (inject to combustion chamber). To raise the needle 13 it is necessary to have a greater force from the pressure than the force from a spring 21 pressing the needle 13 down.
- When the control oil is applied a small amount of control oil will flow through a deaerating valve 38, fig. 17 until it closes (closing pressure is 5 bar). The function of the deaerating valve 38 is to circulate control oil in the chamber 49 and deaerate the chamber 49, fig. 11.
- After injection the control oil will be released and liquid gas with a pressure of 8 bar will raise the pistons 7,6 again.

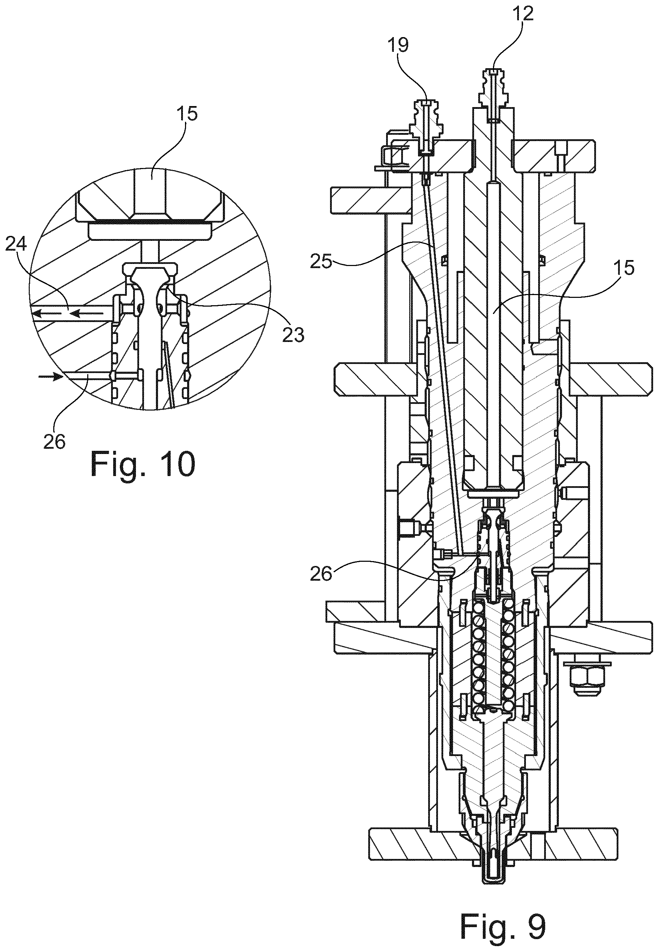

When the engine stops it is necessary to remove the liquid gas from the chamber 48. When the purge oil is applied with a pressure of 300 bar, the hydraulic oil will flow through the channel 25, fig. 20, and the channel 26, fig. 10, and raise the piston 16, fig. 10. Thereafter control oil will be applied and the piston 7 will push out liquid gas from the chamber 48 through the suction valve to the channels 24 and out to the rail of liquid gas. The purge oil is to open the suction valve (which is normally closed). The suction valve is a one way valve.

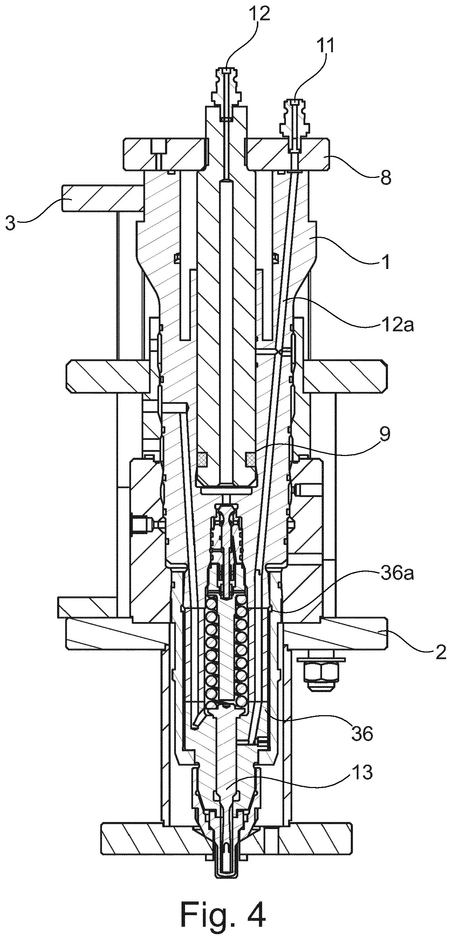

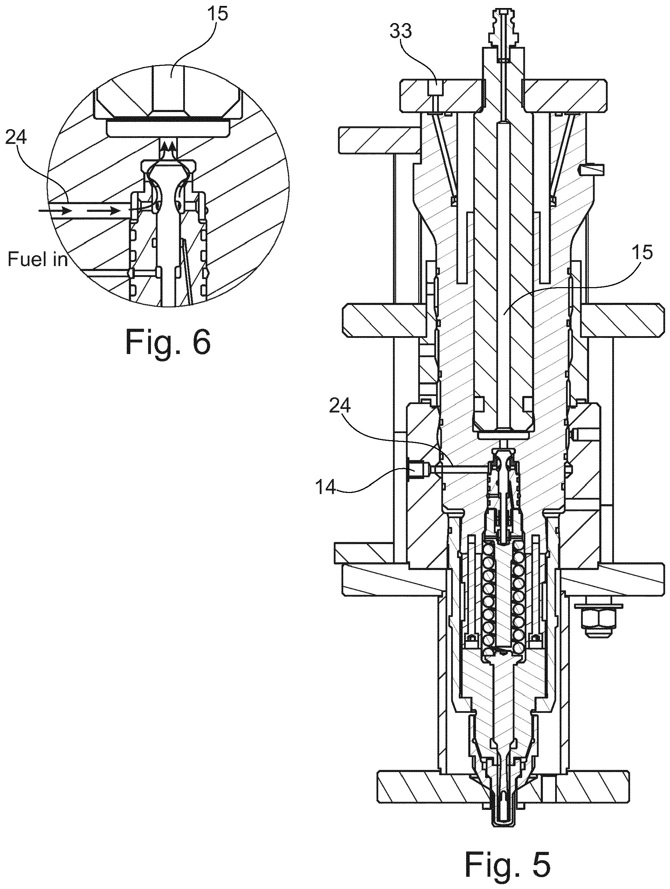

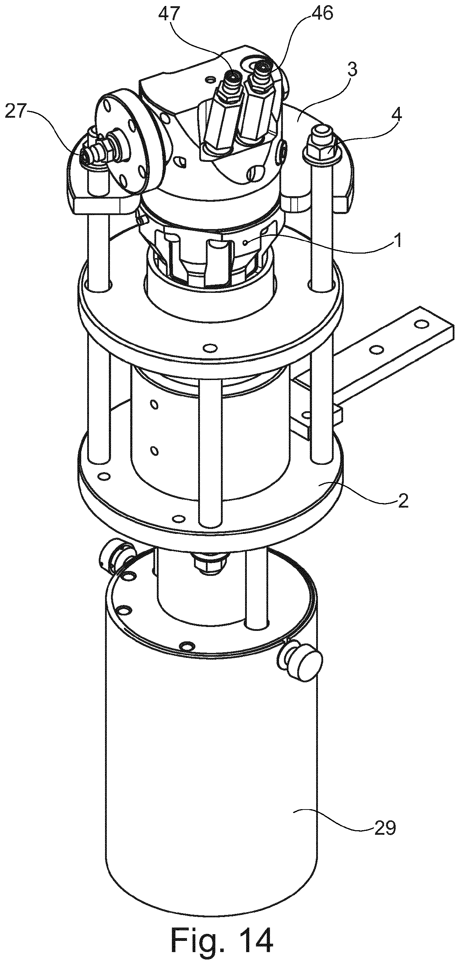

The injector valve 1 is placed in a holder 2 shown in fig. 14. The injector valve 1 is pressed down by means of a plate 3 which is tightened by means of two nuts 4. The injector valve has a port 11, fig. 4, to which sealing oil is applied, and a port 12 to which control oil is applied. It also has a port 14, fig.5, to which fuel inlet oil is supplied, and a port 19, fig. 9, to which purge oil is supplied. It also has a port 28, fig. 11, which through a leak hose is connected to a spray chamber 29, fig. 14, and a port 33, fig.5, connected to the spray chamber 29 through a leak hose. It also has a port 30 and a port 31, fig. 11, which are connected to the spray chamber 29. It also has the port 27, fig. 11, to which control oil is supplied, and the port 28 which is connected to the spray chamber 29 through a leak hose.

A mineral hydraulic oil with a viscosity of 10 cSt is used for the test.

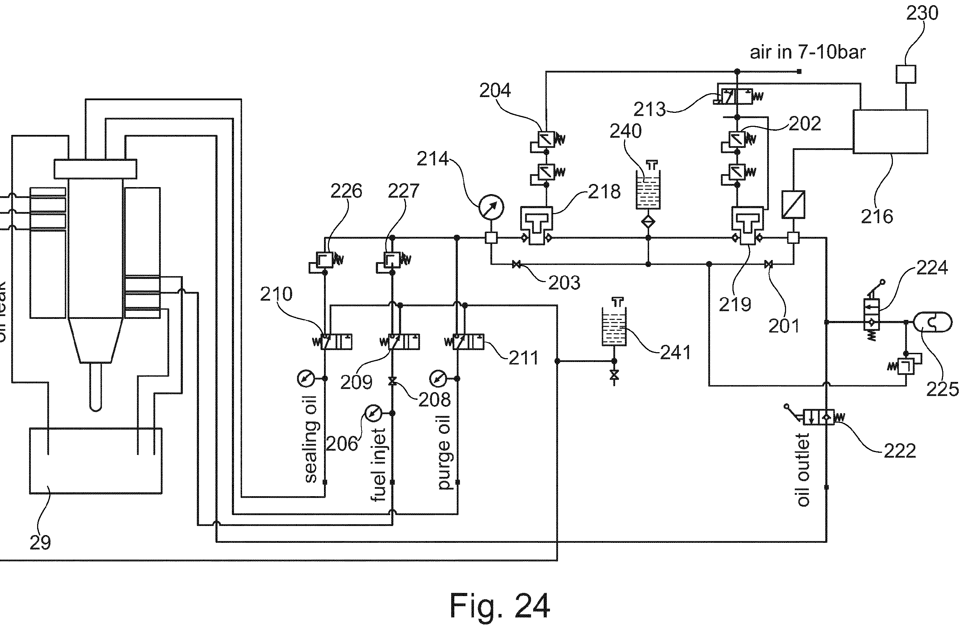

The test system illustrated in fig. 24 comprises an air driven pump 219 which is able to provide a hydraulic oil pressure of up to 1000 bar of oil from a tank 240. The pump 219 is controlled by means of an air pressure regulator 202 which is manually operated. The pump 219 is also operated by a pneumatic directional valve 213. The hydraulic pressure is displayed at a digital instrument 216. The digital instrument receives an electrical signal of 4-20 mA from a pressure transmitter (converter). The digital instrument 216 can be set to different modes by means of a selector 230. The digital instrument 216 receives an electrical signal from the pressure transmitter and operates the directional valve 203 in response to the signal. The digital instrument 216 opens or closes the pneumatic directional valve 213 in response to the mode set by the selector 230. The oil pressure from the pump 219 can be released by means of a relief valve 201, in which case the released hydraulic oil will flow back to the tank 240. The pump 219 also sucks hydraulic oil from the tank 240 and produces a hydraulic oil pressure which is used as control oil for a fuel injector valve. At the outlet pipe line of the pump 219 are mounted manually operated on/off valves 224,222. By opening or closing of the on/off valve 224 a hydraulic accumulator 225 can be charged. A safety valve is adjusted to a max pressure of the hydraulic accumulator 225.

The test system also comprises a second air driven pump 218. This pump also sucks also sucks hydraulic oil from the tank 240 and is controlled by means of an air pressure regulator 204. By adjusting the regulator 204 the hydraulic oil pressure from the pump 218 can be adjusted to specific values. A pressure gauge 214 shows the hydraulic oil pressure from the pump 218. The oil pressure from the pump 218 can be released by means of a relief valve 203. A pressure regulator makes it possible to adjust the max oil pressure from the pump 218. The oil under pressure from the pump 218 is used as sealing oil, fuel inlet and purge oil which are applied to different sections illustrated in fig. 24. At the sealing oil section hydraulic oil from the pump 218 flows through a pressure reduction valve 226 and a hydraulic directional valve 210 to the fuel injector valve, the sealing oil pressure being displayed at a pressure gauge. The hydraulic directional valve 210 has two positions. In the first position oil can flow from the fuel injector valve to the tank 241 and in the second position hydraulic oil can flow from the pump 218 to the injector valve. At the fuel inlet section hydraulic oil can flow from the pump 218 through a pressure reduction valve 227, a hydraulic reduction valve 209 and a stop valve 208 to the fuel injector valve, the fuel inlet pressure being shown at a pressure gauge 206. The hydraulic directional valve has two positions. In the first position oil can flow from the fuel injector valve to the tank 241. In the second position hydraulic oil can flow from the pump 218 to the fuel injector valve. By closing the stop valve 208, if the fuel inlet pressure at the fuel injector valve is increasing, it is possible to see the pressure at the pressure gauge 206. At the purge oil section hydraulic oil will flow from the pump 218 through a hydraulic directional valve 211 to the fuel injector valve, the purge oil pressure being shown at a pressure gauge. The directional valve 211 has two positions. In the first position oil can flow from the fuel injector valve to the tank 241 and in the second position hydraulic oil can flow from the pump 218 to the fuel injector valve. By means of the reduction valves 226,227 the hydraulic pressure from the pump 218 can have three different values.

The test system has two tanks 240,241. The first tank 240 is filled with mineral hydraulic oil. The second tank 241 contains hydraulic oil collected from the fuel injector valve. The hydraulic oil in the tank 241 can include methanol from the fuel injector valve.

### 1. Cleaning process of the injector valve

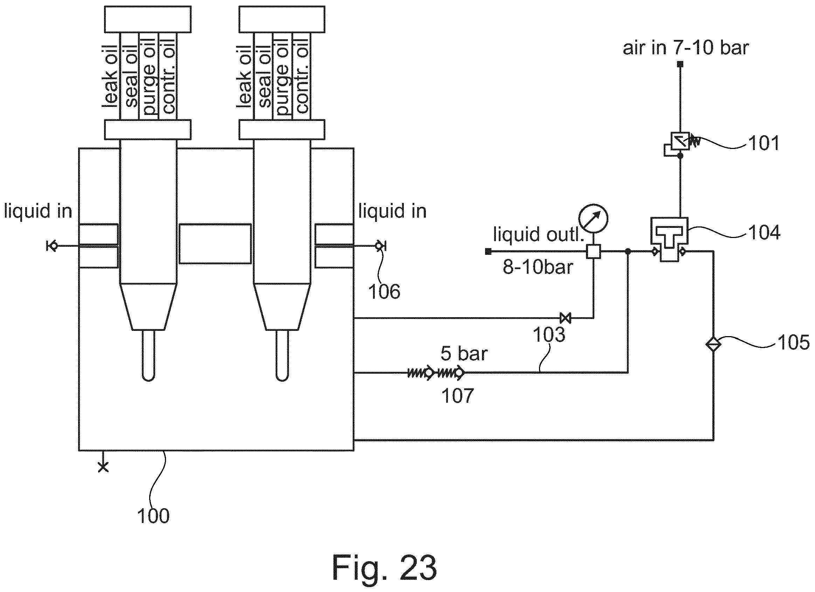

When the injector valve 1 is dismounted from the engine, it has to be placed in a cleaning device, fig 23, as it may contain methanol, f. inst. in the chamber 48, the channels 18,18a and in the nozzle 20. Methanol left in the injector valve 1 has to be flushed out before it can be tested.

The cleaning system illustrated in fig. 23 is built as a movable unit with four wheels. It consists of a tank 100 and a hydraulic system. The tank 100 includes two valve holders. By means of the cleaning system it is possible to transport two fuel injector valves safely at the same time. A fuel injector valve which has been dismounted from the cylinder head of an engine may contain some methanol. By placing the injector valve in one of the valve holders it can be transported safely to a workshop.

The cleaning system comprises an air driven hydraulic pump 104, which is controlled by means of an air pressure regulator. The pump 104 sucks flushing liquid from the tank through a filter 105. The pressure of the flushing liquid from the pump 104 is shown at a pressure gauge. The pressure of the flushing liquid from the pump can be released by means of a relief valve. At the outlet of the pump 104 is located a safety valve 107. The tank 100 is filled with flushing liquid which is a mixture of 95% water and 5% lubrication additives. Methanol can be dissolved in the water.

By using the cleaning system the fuel injector valve can be flushed from methanol (which could be left in the fuel injector valve). By a few injections from the fuel injector valve the methanol remaining in the fuel injector valve will be flushed out. During the flushing process the flushing liquid from the pump is applied to the fuel injector valve from the cleaning system.

After a flushing of the fuel injector valve it can be dismounted and renovated.

The cleaning process is performed as follows
- connect a hose with cleaning liquid to a port 106, fig. 23, which is connected to the channel 24, fig. 10 (sealing oil and control oil are supplied to the ports 27 and 47)
- close a return valve 203 to the pump, fig. 24
- increase the pressure by means of a return valve 204 and a pump until a pressure of 300 bar is indicated on a pressure gauge 214
- switch a directional valve 210 to position "ON" for supply of sealing oil
- close a valve 103, fig. 23
- increase flushing liquid pressure by means of a control valve 101, fig. 23, to 8 bar. Flushing liquid will flow through the suction valve and fill the chamber 48. The flushing liquid is a mixture of water and lubrication/anticorrosion additives
- set a selector 230 to position CLEANING, fig. 24
- close a return valve 201
- open a valve 224
- close an outlet valve 222
- increase the pressure of the control oil by means of a control valve 202 and a pump until it automatically switches off at about 200 bar. The pressure is shown on a display 216. Control oil pressure is accumulated in a hydraulic accumulator 225, fig. 24.
- open the outlet valve 222 fast. Control oil will now be released from the accumulator 225 and flow through a channel 44, fig. 11, to a chamber 49 and push down pistons 6 and 7. Piston 7 will push liquid from the chamber 48 through channels 18,18a to the nozzle 20, fig. 7 and liquid will be sprayed out to the chamber 29.
- the cleaning process has to be repeated several times.

### 2. Test of fuel injector valve

1. The top cover 5 and the pistons 6 and 7 have to be demounted from the injector valve.
   - The connecting piece 8 with a sealing ring 9 has to be mounted by means of screws 10.
   - The injector valve is placed in the valve holder 2.
2. Test of opening pressure.
   - set a selector 230 to OPEN PRESSURE position
   - close the valve 203
   - increase the pressure to max 300 bar by means of the valve 204.
   - close the valve 201
   - switch a directional valve 210 to "ON" so as to apply sealing oil to port 11. The sealing oil will now flow through the port 12a to the needle 13 and the connecting piece 8.
   - switch a directional valve 209 to position "ON" so as to apply fuel oil with a pressure of 8 bar to port 14. The fuel oil will now flow through the suction valve to a channel 15, fig. 6. The suction valve which is shown in fig. 15 is normally closed. The fuel inlet oil pressure of 8 bar raises the piston 16 against the spring 17. Without fuel inlet oil pressure the piston 16 is pressed down due to the spring 17 so that the suction valve remains closed.
   - open the valve 222
   - close the valve 224
   - increase the control oil pressure by means of the control valve 202, fig. 24, until the opening pressure is reached, and the injection valve sprays in the chamber 29. The measured opening pressure is shown on the display 16. The pump stops automatically. The control oil pressure is increased by means of the pressure control valve 202. The control oil supplied to the port 12 will now flow through the channels 15 and 18,18a to the needle 13. The needle 13 is pushed down due to the spring 21. When the opening pressure is reached the needle 13 is raised (at the same time the spring 21 will be compressed), the connection 22, fig. 7, will open and oil will be sprayed from the nozzle 20 to the spray chamber 29.
   - switch the directional valve 209 to position "OFF".
   - switch the directional valve 210 to position "OFF"
   - open the pressure control valve 202 and turn it counter clockwise
   - open the valve 201 to release the control oil pressure.

### 3. Test of nozzle seal

- set a selector 230 to NOZZLE SEAL POSITION
- close the valve 201
- switch the directional valve 209 to ON
- switch the directional valve 210 to ON
- open the valve 222
- close the valve 224
- increase pressure by means of the pressure control valve 202 to 20 bar below opening pressure
- close a valve 208
- the pressure illustrated on a pressure gauge 206 should be zero. In case of leaks the pressure on the pressure gauge 206 will be increased. Now it will checked if the suction valve is close. If the connection is not tight the pressure shown on the pressure gauge 206 will increase. The control oil tries to flow from the channel 15 to a channel 24 through a connection 23. The control oil flows from the channel 15 through the channels 18,18a to the chamber 52. In case of leaks through connection 22, fig. 7, oil will drop from the nozzle 20, fig.7.
- switch the directional valve 210 to OFF
- open the pressure the control valve 202 by turning it counter clockwise
- open the valve 201
- open the valve 208

### 4. Test of purge function

- set a selector 230 to purge Function
- close the valve 201
- open the valve 222
- close the valve 224
- switch the directional valve 211 to position ON. The purge oil applied to port 19 will now flow through the channels 25 and 26. The pressure of the purge oil pushes the piston 16 up so that the connection 23 opens.
- try to increase the pressure by means of the pressure control valve 202. If the purge function is operating correct it will not be possible to increase the control oil pressure shown on the display 216 because the control oil will flow from the channel 15 to the channel 24 through the suction valve.
- switch the direction valve 211 to OFF
- open the pressure control valve 202 by turning it counter clockwise
- open the valve 201.

### 5. Test of deaerating valve function

- Mount the pistons 6 and 7 in the injector valve and mount the top cover 5
- set the selector 230 to Deaerating Valve position
- switch the directional valve 210 to "ON"
- switch the directional valve 209 to "ON"
- close the valve 201
- close the valve 222
- open the valve 224
- increase the control oil pressure by means of the pressure control valve 202 until it switches off automatically (at about160 bar). Control oil pressure is accumulated in a hydraulic accumulator 225.
- open the valve 222 fast. Control oil accumulated in the accumulator 225 will now flow through the channel 44, fig. 11 to the port 41, fig. 17, and push the piston 43 so that the connection 40 in the deaerating valve will be closed (as a result oil cannot flow through the deaerating valve 38). When the deaerating valve 38 is opened the control oil can flow from the port 41 to the port 42 (control oil can flow from the channel 44, fig. 11,through the deaerating valve 38 and to the port 28, fig. 11, which is connected to the spray chamber 29). The connection 40 is normally open due to the spring 39 which keeps the piston 43 in "open" position.
- The control oil pressure will now slowly decrease until it reaches the opening pressure of the deaerating valve 38. When the deaerating valve 38 opens the opening pressure is frozen on the display 216.
- switch the directional valve 210 to OFF
- switch the directional valve 209 to OFF
- open the pressure control valve 202 by turning it counter-clockwise
- open the valve 201.

If the O-ring 32, fig. 11, is not seal oil will be leaking from the port 30. If the O-ring 32a is not seal oil will be leaking from the port 31.

In case of leaks at the seals 34,34a,35 and 35a and 36,36a the leaks will flow through the channel 37 to the port 31.

It is important to check the functionality of the deaerating valve by checking the opening pressure.

## Claims

1. A method of checking a deaerating valve (38) for an injector valve,
wherein the injector valve (1) with pistons (6,7) and a top cover (5) is placed in a holder (2) and the deaerating valve (38) is mounted in the top cover (5), said deaerating valve (38) having an oil inlet port (41) communicating with a channel within a piston (43), an oil outlet port (42) with an outlet connection (40), a spring (39) controlling the piston (43) for opening the outlet connection (40) thereby providing a fluid communication from the oil inlet port (41) through the channel within the piston (43) and to the oil outlet port (42), and said top cover (5) having a control oil supply port (27) communicating with an oil supply channel (44) and an oil outlet port (28) communicating with a spray chamber (29), which oil supply channel (44) further communicates with the oil inlet port (41) of the deareating valve (38),
and wherein control oil is supplied to the deaerating valve, said control oil being accumulated in a hydraulic accumulator (225), from where the control oil is supplied to the control oil supply port (27), through the channel (44) to the oil inlet port (41) of the deaerating valve (38) and further into the channel within the piston (43), **characterized in that**
the pressure of the supplied control oil is increased so as to close the deaerating valve (38) by pushing the piston (43) to overcome the force of the spring (39) thereby closing the outlet connection (40) within the deaerating valve (38), after which the control oil pressure is slowly decreased until the deaerating valve (38) opens, whereby control oil flow via the control oil supply port (27), through the channel (44) to the oil inlet port (41), through the channel of the piston (43), through the oil outlet port (42), and through the oil outlet port (28) in the top cover (5) into the spray chamber (29), and the opening pressure is shown on a display (216).

## Patentansprüche

1. Verfahren zum Prüfen eines Entlüftungsventils (38) für ein Einspritzventil,
wobei das Einspritzventil (1) mit Kolben (6, 7) und einer oberen Abdeckung (5) in einem Halter (2) angeordnet ist und das Entlüftungsventil (38) in der oberen Abdeckung (5) angebracht ist, wobei das Entlüftungsventil (38) eine Öleinlassöffnung (41), die mit einem Kanal innerhalb eines Kolbens (43) in Verbindung steht, eine Ölauslassöffnung (42) mit einer Auslassverbindung (40), eine Feder (39) aufweist, die den Kolben (43) zum Öffnen der Auslassverbindung (40) steuert, wodurch eine Fluidverbindung von der Öleinlassöffnung (41) durch den Kanal innerhalb des Kolbens (43) und zur Ölauslassöffnung (42) vorgesehen wird, und wobei die obere Abdeckung (5) eine Steuerölzufuhröffnung (27), die mit einem Ölzufuhrkanal (44) in Verbindung steht, und eine Ölauslassöffnung (28) aufweist, die mit einer Sprühkammer (29) in Verbindung steht, wobei der Ölzufuhrkanal (44) ferner mit der Öleinlassöffnung (41) des Entlüftungsventils (38) in Verbindung steht,
und wobei Steueröl dem Entlüftungsventil zugeführt wird, wobei das Steueröl in einem Hydraulikspeicher (225) gespeichert wird, von wo das Steueröl der Steuerölzufuhröffnung (27), durch den Kanal (44) zur Öleinlassöffnung (41) des Entlüftungsventils (38) und weiter in den Kanal innerhalb des Kolbens (43) zugeführt wird, **dadurch gekennzeichnet, dass**
der Druck des zugeführten Steueröls erhöht wird, um das Entlüftungsventil (38) durch Schieben des Kolbens (43) zum Überwinden der Kraft der Feder (39) zu schließen, wodurch die Auslassverbindung (40) innerhalb des Entlüftungsventils (38) geschlossen wird, wonach der Steueröldruck langsam gesenkt wird, bis sich das Entlüftungsventil (38) öffnet, wobei Steueröl über die Steuerölzufuhröffnung (27), durch den Kanal (44) zur Öleinlassöffnung (41), durch den Kanal des Kolbens (43), durch die Ölauslassöffnung (42) und durch die Ölauslassöffnung (28) in der oberen Abdeckung (5) in die Sprühkammer (29) fließt und der Öffnungsdruck auf einer Anzeige (216) gezeigt wird.

## Revendications

1. Procédé de contrôle d'une soupape de désaération (38) pour une soupape d'injecteur,
dans lequel la soupape d'injecteur (1) avec pistons (6, 7) et couvercle de dessus (5) est placée dans un support (2), et la soupape de désaération (38) est montée dans le couvercle de dessus (5), ladite soupape de désaération (38) ayant un port d'entrée d'huile (41) communiquant avec un canal à l'intérieur d'un piston (43), un port de sortie d'huile (42) avec une connexion de sortie (40), un ressort (39) commandant le piston (43) pour ouvrir la connexion de sortie (40), fournissant ainsi une communication fluidique du port d'entrée d'huile (41) à travers le canal à l'intérieur du piston (43) et vers le port de sortie d'huile (42), et ledit couvercle de dessus (5) ayant un port d'alimentation d'huile de commande (27) communiquant avec un canal d'alimentation d'huile (44) et un port de sortie d'huile (28) communiquant avec une chambre de pulvérisation (29), lequel canal d'alimentation d'huile (44) communique en outre avec le port d'entrée d'huile (41) de la soupape de désaération (38),
et dans lequel l'huile de commande est alimentée vers la soupape de désaération, ladite huile de commande étant accumulée dans un accumulateur hydraulique (225) d'où l'huile de commande est alimentée vers le port d'alimentation d'huile de commande (27), à travers le canal (44), vers le port d'entrée d'huile (41) de la soupape de désaération (38) puis jusque dans le canal à l'intérieur du piston (43), **caractérisé en ce que**
la pression de l'huile de commande alimentée est augmentée de façon à fermer la soupape de désaération (38) en poussant le piston (43) à surmonter la force du ressort (39), fermant ainsi la connexion de sortie (40) à l'intérieur de la soupape de désaération (38), après quoi la pression de l'huile de commande est lentement baissée jusqu'à ce que la soupape de désaération (38) s'ouvre, ce par quoi l'huile de commande circule par le biais du port d'alimentation d'huile de commande (27), à travers le canal (44), vers le port d'entrée d'huile (41), à travers le canal du piston (43), à travers le port de sortie d'huile (42) et à travers le port de sortie d'huile (28) dans le couvercle de dessus (5) jusque dans la chambre de pulvérisation (29), et la pression d'ouverture est affichée sur un écran (216).
